# EUROPEAN PATENT APPLICATION

(11) **EP 4 248 756 A1**
(43) Date of publication of application: **27.09.2023**
(21) Application number: 21941539.5
(22) Date of filing: 30.07.2021
(51) Int. Cl.: A21D 2/02

(54) **ACID LEAVENING AGENT HAVING HIGH NEUTRALIZING VALUE, AND PREPARATION METHOD THEREFOR AND APPLICATION THEREOF**

(30) Priority: 11.05.2021 CN 202110509138
(71) Applicant: Yunnan Addiphos Technology Co., Ltd., Kunming, Yunnan 650000 (CN)
(72) Inventor: LI, Jingmin, Kunming, Yunnan 650000 (CN); LI, Wen, Kunming, Yunnan 650000 (CN)
(74) Representative: Porta & Consulenti Associati S.p.A.
(86) International application number: PCT/CN2021/109472
(87) International publication number: WO 2022/236970

(57) **Abstract**

The present disclosure provides an acidic leavening agent with a large neutralization value and a preparation method and use thereof. The acidic leavening agent includes disodium dihydrogen pyrophosphate, and has a neutralization value of greater than or equal to 100; and an aqueous solution with a mass fraction of 1.0% of the acidic leavening agent has a pH value of 2.5 to 3.5.

## Description

### CROSS REFERENCE TO RELATED APPLICATION

The present disclosure claims the priority to Chinese Patent Application No. CN202110509138.4, titled "ACIDIC LEAVENING AGENT WITH LARGE NEUTRALIZATION VALUE AND PREPARATION METHOD AND USE THEREOF", filed with China National Intellectual Property Administration (CNIPA) on May 11, 2021, which is incorporated herein by reference in its entirety.

### TECHNICAL FIELD

The present disclosure relates to the technical field of fermentation, and in particular relates to an acidic leavening agent with a large neutralization value and a preparation method and use thereof.

### BACKGROUND

Acidic leavening agents have been used in the baking industry for many years. The neutralization value of an acidic leavening agent can reflect the pros and cons of dough fermentation efficiency. Commonly-used acidic leavening agents include potassium hydrogen tartrate, sodium dihydrogen phosphate, potassium dihydrogen phosphate, ammonium dihydrogen phosphate, calcium dihydrogen phosphate, disodium dihydrogen pyrophosphate, alum, dried alum, and sodium aluminum phosphate. The dried alum and the sodium aluminum phosphate are acidic leavening agents with fast response and a relatively-large neutralization value.

However, excessive intake of aluminum can cause great harm to human health, leading to a large loss of calcium *in vivo,* forming osteoporosis and "pseudo-closure" of epiphyses. Excessive aluminum can cause a great damage to the brain nerves, resulting in memory and intelligence decline. The excessive aluminum can also inhibit the activity of pepsin to hinder the digestion and absorption functions of the human body. As a result, people have inappetence and indigestion, which affect the intestinal absorption of beneficial trace elements such as strontium, iron, calcium, and zinc. There are restrictions on the use of aluminum in food processing, and some regions also have regulations restricting the use of aluminum.

During neutralization, ammonium salt-based fermented acids form (NH₄)HCO₃, which is finally decomposed into ammonia gas. The ammonia gas can be mixed with food-derived water vapor to form NH₄OH, resulting in ammonia odor in food. Moreover, an increase in the pH value not only causes a darker color of the food, but also destroys a tissue structure of the food. Calcium dihydrogen phosphate has a high reaction rate, and shows a suitable effect in an early stage of the reaction. However, the calcium dihydrogen phosphate has no secondary gas generation effect, leading to insufficient expansion of the dough in a later stage. If this substance is dehydrated into acidic calcium pyrophosphate, a neutralization value may drop significantly.

In contrast, disodium dihydrogen pyrophosphate has secondary swelling characteristics, and an increasing reaction rate. Moreover, by adopting some technical means including inert coating/wrapping, the disodium dihydrogen pyrophosphate can keep its neutralization value unchanged, and then react with sodium bicarbonate at different reaction rates. Although having a neutralization value of 72, disodium dihydrogen pyrophosphate has not been replaced by other substances so far, as the most commonly-used acidic leavening agent.

However, due to a large amount of Na ions that are going to be ingested by the human body, the conventional use of disodium dihydrogen pyrophosphate has the risk of causing heart load and then inducing cardiovascular and other diseases.

### SUMMARY

The present disclosure provides an acidic leavening agent with a large neutralization value. The acidic leavening agent has secondary swelling, increasing reaction rate and the like. In the present disclosure, by using specific means to increase the neutralization value from 72 to not less than 100, a neutralization efficiency is increased by about 40%.

The present disclosure further provides a preparation method of the acidic leavening agent. Under the condition that the substance and molecular structure of disodium dihydrogen pyrophosphate are kept unchanged, excessive pyrophosphate makes the disodium dihydrogen pyrophosphate of a standard molecular structure be in a critical state where the molecular structure is going to be changed, thereby improving the neutralization value. The neutralization value is improved, and an application efficiency is improved. Under a same use effect, a dosage of fermented acids is reduced, and a sodium content in human food intake is also reduced. As a result, food and safety are enhanced, and human health is improved. Moreover, the preparation method has a simple process, mild conditions, and no "waste water, waste gas, and solid waste" generated.

The present disclosure further provides use of the acidic leavening agent with a large neutralization value. The compatibility of the acid leavening agent with sodium bicarbonate can significantly improve the neutralization efficiency.

In order to realize the present disclosure, the following technical solutions are specially adopted:
The present disclosure provides an acidic leavening agent, including disodium dihydrogen pyrophosphate, where the acidic leavening agent has a neutralization value of greater than or equal to 100; and an aqueous solution with a mass fraction of 1.0% of the acidic leavening agent has a pH value of 2.5 to 3.5.

The acidic leavening agent is an acidic component in a chemical leavening agent, and can play the role of leavening food after being matched with an alkaline component.

Disodium dihydrogen pyrophosphate is a commonly used acidic leavening agent. However, the disodium dihydrogen pyrophosphate has a low neutralization value of only 72 and a slightly lower foaming efficiency. Moreover, due to a large amount of Na ions that are going to be ingested by the human body, the use of disodium dihydrogen pyrophosphate is prone to causing heart load and then inducing cardiovascular and other diseases.

In the present disclosure, compared with disodium dihydrogen pyrophosphate, the acidic leavening agent keeps a molecular structure of the disodium dihydrogen pyrophosphate unchanged. The acidic leavening agent also significantly improves the neutralization value, thereby effectively improving the neutralization efficiency.

In the present disclosure, the acidic leavening agent has a neutralization value increased by about 40%, which significantly improves a fermentation efficiency. Meanwhile, the acidic leavening agent can reduce about 40% of sodium intake, making food safer and more beneficial to human health.

Optionally, the acidic leavening agent has a neutralization value of 100 to 120.

Optionally, an aqueous solution with a mass fraction of 1.0% of the acidic leavening agent has a pH value of 2.7 to 3.3.

Optionally, the acidic leavening agent further includes monosodium pentahydrogen phosphate.

The monosodium pentahydrogen phosphate has a chemical formula NaH₅(PO₄)₂.

Optionally, the monosodium pentahydrogen phosphate has a mass fraction of 1% to 30%.

In the present disclosure, pyrophosphoric acid was gradually added to the disodium dihydrogen pyrophosphate, and then analyzed by X-ray diffraction (XRD). Surprisingly, an obtained XRD pattern showed that the positions of peaks in the entire XRD pattern remained unchanged. However, the spectrum of each peak point gradually widened, the neutralization value (hereinafter referred to as "NV") increased rapidly, and the pH value gradually decreased. When the pyrophosphoric acid increased to a certain amount, monosodium pentahydrogen phosphate appeared in the XRD pattern. In this state, the molecular structure of disodium dihydrogen pyrophosphate remained unchanged, while the NV and pH values had changed.

The present disclosure provides a preparation method of the acidic leavening agent, including the following steps:
mixing the disodium dihydrogen pyrophosphate with a pyrophosphoric acid solution uniformly, subjecting an obtained mixture to a hydrothermal reaction, and then drying a resulting product to obtain the acidic leavening agent.

In the preparation method of the acidic leavening agent provided by the present disclosure, excessive pyrophosphate makes the disodium dihydrogen pyrophosphate of a standard molecular structure be in a critical state where the molecular structure is going to be changed, thereby increasing the NV and improving the neutralization efficiency. For example, the neutralization value is increased by about 40%.

Optionally, the disodium dihydrogen pyrophosphate and the pyrophosphoric acid solution are at a mass ratio of 1:(0.01-0.025).

By adjusting the disodium dihydrogen pyrophosphate and the pyrophosphoric acid solution within the above ratio range, the NV can be further improved.

Optionally, the disodium dihydrogen pyrophosphate has a purity of greater than or equal to 95%.

Optionally, the disodium dihydrogen pyrophosphate has a particle size of 20 mesh to 100 mesh.

By regulating the purity and particle size of the disodium dihydrogen pyrophosphate, it is convenient to further improve the NV of the acidic leavening agent.

Optionally, the solution of the pyrophosphoric acid has a mass fraction of 40% to 60%.

Exemplarily, the solution of the pyrophosphoric acid has a mass fraction of 50%.

The pyrophosphoric acid solution with the above concentration can further improve the NV of the acidic leavening agent.

Optionally, the mixing specifically includes: mixing the pyrophosphoric acid solution with the disodium dihydrogen pyrophosphate by pressure spraying, and stirring evenly.

Exemplarily, the mixing is conducted in a rotary mixer.

For example, the mixing specifically includes: placing the disodium dihydrogen pyrophosphate in the rotary mixer; during stirring of the disodium dihydrogen pyrophosphate, spraying the pyrophosphoric acid solution on a surface of the disodium dihydrogen pyrophosphate material by pressure spraying. By adjusting a spraying pressure and a spraying rate, it is conducive to uniform stirring, so as to better improve the NV of the acidic leavening agent.

Optionally, the pressure spraying is conducted at 0.1 Pa.

Optionally, the pressure spraying is conducted at 5 mL/min to 6 mL/min.

Optionally, the stirring is conducted at 30 rpm to 40 rpm.

Exemplarily, the stirring is conducted at 35 rpm.

Pyrophosphoric acid is a viscous liquid. The pyrophosphoric acid is diluted to obtain a spraying solution to facilitate the spraying of the pyrophosphoric acid solution. This is conducive to the uniformity of the disodium dihydrogen pyrophosphate and the pyrophosphoric acid solution during mixing.

Optionally, before the disodium dihydrogen pyrophosphate and the pyrophosphoric acid solution are uniformly mixed, the pyrophosphoric acid solution is further diluted.

Optionally, the dilution includes: accurately weighing the pyrophosphoric acid solution, and diluting to 100 mL with water to prepare a spraying solution.

Optionally, the hydrothermal reaction is conducted at 90°C to 130°C for 30 min to 50 min.

Exemplarily, the hydrothermal reaction is conducted at 100°C to 120°C.

A reaction time of the hydrothermal reaction is the stirring and mixing time of the whole reaction.

Exemplarily, the hydrothermal reaction is conducted for 35 min to 45 min.

Optionally, the preparation method further includes thermal discharge when the hydrothermal reaction is conducted.

The mixing of the disodium dihydrogen pyrophosphate and the pyrophosphoric acid solution is an exothermic process at greater than 100°C. Therefore, it is necessary to remove heat in time to avoid material agglomeration.

Exemplarily, the thermal discharge is conducted in time with an exhaust fan.

Optionally, the drying is conducted at 155°C to 165°C for 1.5 h to 2.5 h.

A mixed material is heated and dried at temperature and time that are adjusted within the above range. This is beneficial to control a composition of the acidic leavening agent, thereby better improving the NV of the acidic leavening agent.

Optionally, the drying is conducted at 157°C to 162°C.

Exemplarily, the drying is conducted at 160°C.

Optionally, the drying is conducted for 1.8 h to 2.2 h.

Exemplarily, the drying is conducted for 2 h.

Optionally, the drying is conducted until the product has a weight loss of less than 0.5%.

The present disclosure further provides use of the acidic leavening agent as an acidic salt of a leavening agent in baked food.

Optionally, the acidic leavening agent is compatible with sodium bicarbonate during use. This can effectively improve the neutralization efficiency.

Exemplarily, the acidic leavening agent and the sodium bicarbonate are at a mass ratio of (0.95-1.2):1, such as 1:1.

In the present disclosure, the acidic leavening agent has a large neutralization value, secondary swelling, and an increasing reaction rate. This is conducive to further popularization and use. The acidic leavening agent can replace chemical leavening acids that are being eliminated or phased out, such as sodium aluminum phosphate and potassium aluminum sulfate, and shows wide application prospects.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 shows an XRD pattern of an acidic leavening agent provided by Example 1 of the present disclosure;
FIG. 2 shows an XRD pattern of an acidic leavening agent provided by Example 2 of the present disclosure;
FIG. 3 shows an XRD pattern of a product provided by Comparative Example 1 of the present disclosure; and
FIG. 4 shows an XRD pattern of a product provided by Comparative Example 2 of the present disclosure.

### DETAILED DESCRIPTION OF THE EMBODIMENTS

Technical solutions of the present disclosure will be clearly and completely described below with reference to specific implementations. However, those skilled in the art will understand that the examples described below are merely some rather than all of the examples of the present disclosure, and the examples are only used to illustrate the present disclosure and should not be regarded as limiting the scope of the present disclosure. All other embodiments obtained by those of ordinary skill in the art based on the embodiments of the present disclosure without creative efforts should fall within the protection scope of the present disclosure. If no specific conditions are specified in the examples, the examples will be implemented under conventional conditions or the conditions recommended by the manufacturer. If the reagents or instruments used do not indicate the manufacturer, they are all conventional products that can be commercially available.

### Example 1

In this example, a preparation method of an acidic leavening agent included the following steps:
(1) 500 g of disodium dihydrogen pyrophosphate was placed in a rotary mixer; 25 g of a pyrophosphoric acid solution with a mass fraction of 50% was diluted to 100 mL with water to obtain a spraying solution, and added into the rotary mixer; where the disodium dihydrogen pyrophosphate had a purity of 95%, a pH value of 4.1, and a particle size of 20 mesh to 100 mesh;
(2) the pyrophosphoric acid solution was mixed with the disodium dihydrogen pyrophosphate by pressure spraying, stirred evenly, and subjected to a hydrothermal reaction; during the hydrothermal reaction, thermal discharge was conducted in time using an exhaust fan; where the pressure spraying was conducted at 0.1 Pa and 5 mL/min; the stirring was conducted at 30 rpm; and the hydrothermal reaction was conducted at 120°C for 30 min; and
(3) an obtained reacted mixture was dried in an oven at 160°C for 2 h to obtain a product.

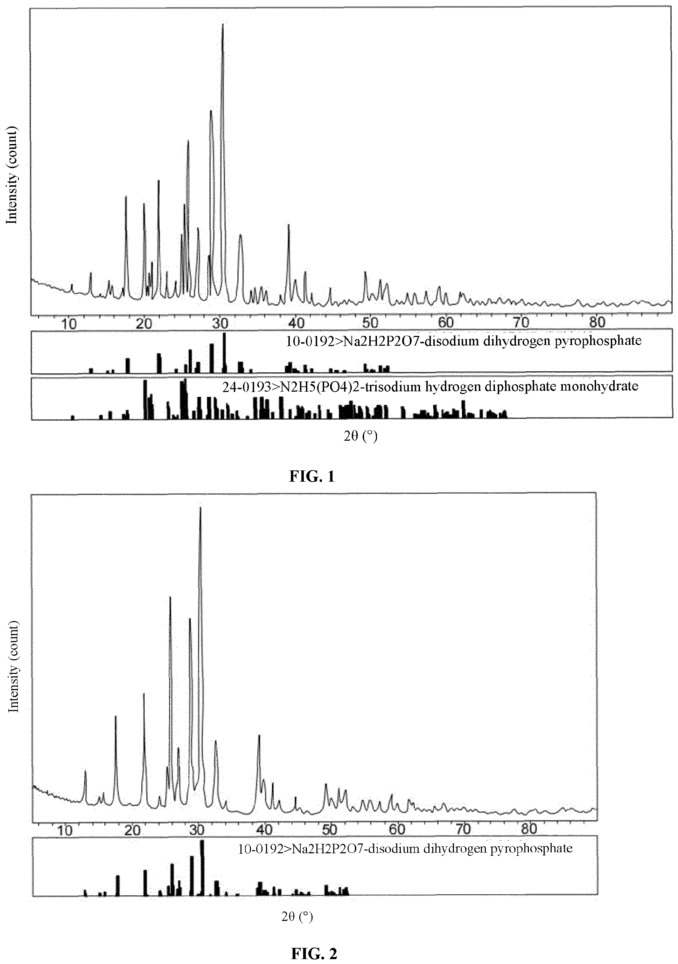

The product prepared in step (3) was subjected to chemical analysis, and it was determined that an aqueous solution with a mass fraction of 1.0% of the product had a pH value of 2.59. A molecular structure of the product analyzed by XRD was shown in FIG. 1. As shown in FIG. 1, the acidic leavening agent prepared in Example 1 had a disodium dihydrogen pyrophosphate content of 74.2%, and a monosodium pentahydrogen phosphate content of 25.8%.

A neutralization value was determined by a neutralization potential method in the Food Chemicals Codex (FCC, U.S.) standard. The neutralization value was determined to be NV=118.

### Example 2

In this example, a preparation method of an acidic leavening agent was basically the same as that of Example 1, except that: in step (1), 14 g of the pyrophosphoric acid solution with a mass fraction of 50% was used.

The product prepared in this example was subjected to chemical analysis, and it was determined that an aqueous solution with a mass fraction of 1.0% of the product had a pH value of 3.05. A molecular structure of the product analyzed by XRD was shown in FIG. 2. As shown in FIG. 2, the acidic leavening agent prepared in Example 2 had a disodium dihydrogen pyrophosphate content of 99.0%, and a monosodium pentahydrogen phosphate content of 1.0%.

A neutralization value was determined by a neutralization potential method in the FCC standard. The neutralization value was determined to be NV=105.

By comparing FIG. 1 with FIG. 2, it was found that compared with FIG. 1, the peak point in FIG. 2 remained unchanged, but the peak map became wider. This suggested that excessive pyrophosphate made the disodium dihydrogen pyrophosphate of a standard molecular structure be in a critical state where the molecular structure was going to be changed, thereby increasing the NV.

### Comparative Example 1

In this comparative example, a preparation method of an acidic leavening agent was basically the same as that of Example 1, except that: in step (1), 4 g of the pyrophosphoric acid solution with a mass fraction of 50% was used.

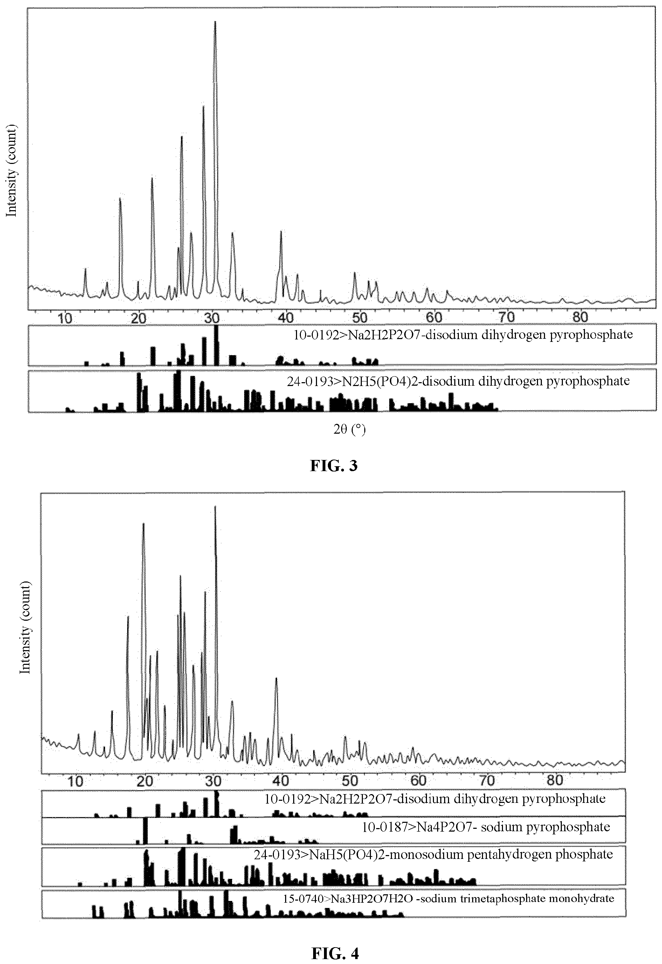

The product prepared in this comparative example was subjected to chemical analysis, and it was determined that an aqueous solution with a mass fraction of 1.0% of the product had a pH value of 3.73. A molecular structure of the product analyzed by XRD was shown in FIG. 3. As shown in FIG. 3, the product prepared in Comparative Example 1 had a disodium dihydrogen pyrophosphate content of 96.5%, and a monosodium pentahydrogen phosphate content of 3.5%.

A neutralization value was determined by a neutralization potential method in the FCC standard. The neutralization value was determined to be NV=79.

By comparing FIG. 1 with FIG. 3, it was seen that although the heating temperature and time were the same, the amount of pyrophosphoric acid added was insufficient to change the molecular structure of the disodium dihydrogen pyrophosphate, such that the NV value was not improved.

### Comparative Example 2

In this comparative example, a preparation method of an acidic leavening agent was basically the same as that of Example 2, except that: in step (2), the hydrothermal reaction was conducted at 180°C for 2.8 h.

The product prepared in this comparative example was subjected to chemical analysis, and it was determined that an aqueous solution with a mass fraction of 1.0% of the product had a pH value of 4.35. A molecular structure of the product analyzed by XRD was shown in FIG. 4. As shown in FIG. 4, in the product of Comparative Example 2, disodium dihydrogen pyrophosphate was 74.2%, sodium pyrophosphate Na₄P₂O₇ was 14.2%, monosodium pentahydrogen phosphate NaH₅(PO₄)₂ was 5.6%, and sodium trimetaphosphate Na₅P₃O₉ was 6.0%.

A neutralization value was determined by a neutralization potential method in the FCC standard. The neutralization value was determined to be NV=91.

By comparing Example 2 with Comparative Example 2, it was shown that although the dosage of pyrophosphoric acid was appropriate, the heating temperature was too high and the heating time was too long. As a result, the molecular structure of the material changed into a mixture of various phosphates with disodium dihydrogen pyrophosphate as a main phase.

It was seen from the above examples and comparative examples that the present disclosure achieved a purpose of increasing the neutralization value through a specific preparation method and adding pyrophosphoric acid. It was beneficial to further increase the neutralization value by controlling the amount of pyrophosphoric acid, as well as heating temperature and time.

The present disclosure has the following beneficial effects:
(1) In the present disclosure, compared with disodium dihydrogen pyrophosphate, the acidic leavening agent has a significantly improved neutralization value of greater than or equal to 100, and a neutralization efficiency was increased by about 40%. Meanwhile, the acidic leavening agent can reduce about 40% of sodium intake at the same fermentation level, making food safer and more beneficial to human health.
(2) In the present disclosure, in the preparation method of an acidic leavening agent, the disodium dihydrogen pyrophosphate and pyrophosphoric acid solution are mixed at a specific ratio, and then subjected to treatments such as pressure spraying, hydrothermal reaction, and drying at a specific temperature. Under the condition that the substance and molecular structure of disodium dihydrogen pyrophosphate are kept unchanged, excessive pyrophosphate makes the disodium dihydrogen pyrophosphate of a standard molecular structure be in a critical state where the molecular structure is going to be changed, thereby improving the neutralization value. For example, the neutralization value is increased by about 40%.
(3) In the present disclosure, the preparation method of an acidic leavening agent has a simple process, mild conditions, and no "waste water, waste gas, and solid waste" generated.
(4) In the present disclosure, the acidic leavening agent has a large neutralization value, secondary swelling, and an increasing reaction rate. This is conducive to further popularization and use. The acidic leavening agent can replace chemical leavening acids that are being eliminated or phased out, such as sodium aluminum phosphate and potassium aluminum sulfate, and shows wide application prospects.

Although the present disclosure has been illustrated and described with specific examples, it should be understood that the above examples are only used to illustrate the technical solution of the present disclosure, not to limit it. Those skilled in the art should understand that without departing from the spirit and scope of the present disclosure, the technical solutions described in the foregoing examples can be modified, or some or all of the technical features can be equivalently substituted. However, these modifications or substitutions do not make the essence of the corresponding technical solutions depart from the scope of the technical solutions of the examples of the present disclosure. It is therefore intended to cover within the appended claims all such substitutions and modifications that are within the scope of the present disclosure.

## Claims

1. An acidic leavening agent, comprising disodium dihydrogen pyrophosphate, wherein the acidic leavening agent has a neutralization value of greater than or equal to 100; and an aqueous solution with a mass fraction of 1.0% of the acidic leavening agent has a pH value of 2.5 to 3.5.

2. The acidic leavening agent according to claim 1, wherein the acidic leavening agent has a neutralization value of 100 to 120; and
preferably, the aqueous solution with the mass fraction of 1.0% of the acidic leavening agent has a pH value of 2.7 to 3.3.

3. The acidic leavening agent according to claim 1, further comprising monosodium pentahydrogen phosphate; wherein
preferably, the monosodium pentahydrogen phosphate has a mass fraction of 1% to 30%.

4. A preparation method of the acidic leavening agent according to any one of claims 1 to 3, comprising the following steps:
mixing the disodium dihydrogen pyrophosphate with a pyrophosphoric acid solution uniformly, subjecting an obtained mixture to a hydrothermal reaction, and then drying a resulting product.

5. The preparation method according to claim 4, wherein the disodium dihydrogen pyrophosphate and the pyrophosphoric acid solution are at a mass ratio of 1:(0.01-0.025);
preferably, the disodium dihydrogen pyrophosphate has a purity of greater than or equal to 95%;
preferably, the disodium dihydrogen pyrophosphate has a particle size of 20 mesh to 100 mesh;
preferably, the solution of the pyrophosphoric acid has a mass fraction of 40% to 60%; and
more preferably, the solution of the pyrophosphoric acid has a mass fraction of 50%.

6. The preparation method according to claim 4, wherein the mixing specifically comprises: mixing the pyrophosphoric acid solution with the disodium dihydrogen pyrophosphate by pressure spraying, and stirring evenly;
preferably, the pressure spraying is conducted at 0.1 Pa;
preferably, the pressure spraying is conducted at 5 mL/min to 6 mL/min;
preferably, the stirring is conducted at 30 rpm to 40 rpm; and
more preferably, the stirring is conducted at 35 rpm.

7. The preparation method according to claim 4, wherein the hydrothermal reaction is conducted at 90°C to 130°C for 30 min to 50 min; and
preferably, the hydrothermal reaction is conducted at 100°C to 120°C.

8. The preparation method according to claim 4, further comprising thermal discharge when the hydrothermal reaction is conducted; wherein
preferably, the thermal discharge is conducted in time with an exhaust fan.

9. The preparation method according to claim 4, wherein the drying is conducted at 155°C to 165°C for 1.5 h to 2.5 h;
preferably, the drying is conducted at 157°C to 162°C;
more preferably, the drying is conducted at 160°C;
preferably, the drying is conducted for 1.8 h to 2.2 h;
more preferably, the drying is conducted for 2 h; and
even more preferably, the drying is conducted until the product has a weight loss of less than 0.5%.

10. Use of the acidic leavening agent according to any one of claims 1 to 3 in food fermentation.
